Europäisches Patentamt

European Patent Office

Office européen des brevets

(11) Veröffentlichungsnummer: **0 115 831**
**B1**

(12) **EUROPÄISCHE PATENTSCHRIFT**

(45) Veröffentlichungstag der Patentschrift:
**13.01.88**

(21) Anmeldenummer: **84100860.0**

(22) Anmeldetag: **27.01.84**

(51) Int. Cl.⁴: **G 02 C 5/12**

(54) **Padbefestigung.**

(30) Priorität: **04.02.83 DE 3303749**

(43) Veröffentlichungstag der Anmeldung:
**15.08.84 Patentblatt 84/33**

(45) Bekanntmachung des Hinweises auf die Patenterteilung:
**13.01.88 Patentblatt 88/2**

(84) Benannte Vertragsstaaten:
**AT DE FR GB IT**

(56) Entgegenhaltungen:
**EP-A-0 018 651**
**DE-A-2 558 122**
**FR-A-2 487 065**
**US-A-2 176 368**

(73) Patentinhaber: **Ferdinand Wagner GmbH & Co.,**
**Tunnelstraße 31, D-7530 Pforzheim (DE)**

(72) Erfinder: **Weber, Peter, Herschelstrasse 53, D-7530**
**Pforzheim (DE)**

(74) Vertreter: **Nowak, Gerhard, DEGUSSA AG**
**Fachbereich Patente Rodenbacher Chaussee**
**Postfach 1345, D-6450 Hanau 1 (DE)**

## Beschreibung

Die Erfindung betrifft eine Padbefestigung für Brillenfassungen, bestehend aus einer Padeinlage mit einem zapfenförmigen, mit einer umlaufenden Nut und einem zum freien Ende hin anschließenden Außenbereich versehenen Befestigungsteil und einer mit einer geschlitzten Öse versehenen Stegstütze.

Brillen benötigen eine Stützvorrichtung, die das Mittelstück der Brille in der erforderlichen sicheren Stellung längere Zeit unverändert auf dem Nasenrücken festhält, ohne störende oder schmerzhafte Empfindungen beim Träger der Brille zu verursachen. Im allgemeinen verwendet man zur auflage der Brille auf dem Nasenrücken bei Metallbrillen sogenannte Pads, die vorwiegend aus Kunststoff gefertigt und über sogenannte Stegstützen an der Brillenfassung befestigt sind. Um bequeme Trageigenschaften zu gewährleisten, müssen die Pads gelenkig gehalten sein. Die Pads sind daher meist mit Padeinlagen versehen, die über eine mechanische Verbindung an der Stegstütze befestigt sind.

In der DE-A-25 58 722 wird eine Padbefestigung beschrieben, bei der der Befestigungsteil der Padeinlage als Zapfen mit eingeschnürtem Querschnitt ausgebildet ist, während die Stegstütze mit einer geschlitzten aufbiegbaren Öse versehen ist, die eine dem Zapfen entsprechende Öffnung aufweist. Bei der Montage wird die Öse zunächst aufgebogen, über den Zapfen gestülpt und wieder zusammengebogen, wobei die Öse der Stegstütze in der Einschnürung des Zapfens aufgenommen wird. Diese Konstruktion hat jedcoh den Nachteil, daß bei der Montage zuweilen starke Verformungen auftreten, die die Verbindung entweder zu locker machen, oder zu fest, wodurch die erwünschte Gelenkigkeit verlorengeht.

Es hat daher nicht an Versuchen gefehlt, bessere Padbefestigungen zu konstruieren. So ist beispielsweise aus der DE-B-24 49 349 eine Padbefestigung bekannt, bei der das Ende der Stegstütze als offener Rahmen mit federnden Schenkeln ausgebildet ist, die das U-förmige Befestigungsteil der Padeinlage umfassen. Nachteilig ist hierbei, daß ein ausschnappen der Verbindung leicht möglich ist und die Teile leicht verloren gehen können.

Bei einer weiteren bekannten Padbefestigung (EP-A-18651) besitzt die mit einem Schlitz versehene Öse der Stegstütze eine elliptische Form und umgreift den ebenfalls ellipsenförmigen, mit einer umlaufenden Nut versehenen Zapfen der Padeinlage. Diese Befestigung hat den Nachteil, daß sie keinen guten Sitz gewährleistet.

Es war daher Aufgabe der vorliegenden Erfindung, eine Padbefestigung für Brillenfassungen zu schaffen, bestehend aus einer Padeinlage mit einem zapfenförmigen, mit einer umlaufenden Nut und einem zum freien Ende hin anschließenden außenbereich versehenen Befestigungsteil und einer mit einer geschlitzten Öse versehenen Stegstütze, die bei einfacher Konstruktion eine sichere und trotzdem gelenkige Verbindung gewährleistet und ein leichtes austauschen der Pads ohne Zuhilfenahme von aufwendigen Spezialwerkzeugen gestattet.

Diese Aufgabe wurde erfindungsgemäß dadurch gelöst, daß das zapfenförmige Befestigungsteil in seinem Nut- und Außenbereich jeweils einen ellipsenförmigen Querschnitt besitzt und die Innenseite der Öse der Stegstützte im Querschnitt einer Kontur folgt, die aus zwei mit ihren Längsachsen senkrecht aufeinander stehenden Ellipsen zusammengesetzt ist, wobei die zum Schlitz parallel liegende Ellipse in ihrer Längs- und Querachse größer als die Ellipse des außenbereichs des Zapfens ist und die zum Schlitz im rechten Winkel stehende Ellipse in ihrer Längsachse um ein geringes kleiner als die Längsachse der Ellipse des Zapfens in dessen Nutbereich und in ihrer Querachse der Ellipse des Zapfens angepaßt ist, so daß der Zapfen bei der Montage durch Drehen um 90° gegenüber der Öse in die im rechten Winkel zum Schlitz stehende Ellipse einrastet.

Des weiteren ist es vorteilhaft, die in Richtung der Zapfenachse definierte Nutbreite des Zapfens größer auszubilden als die Dicke der Öse, so daß die Verbindung ein genügend großes Spiel zur anpassung an die speziellen Erfordernisse des Brillenträgers besitzt.

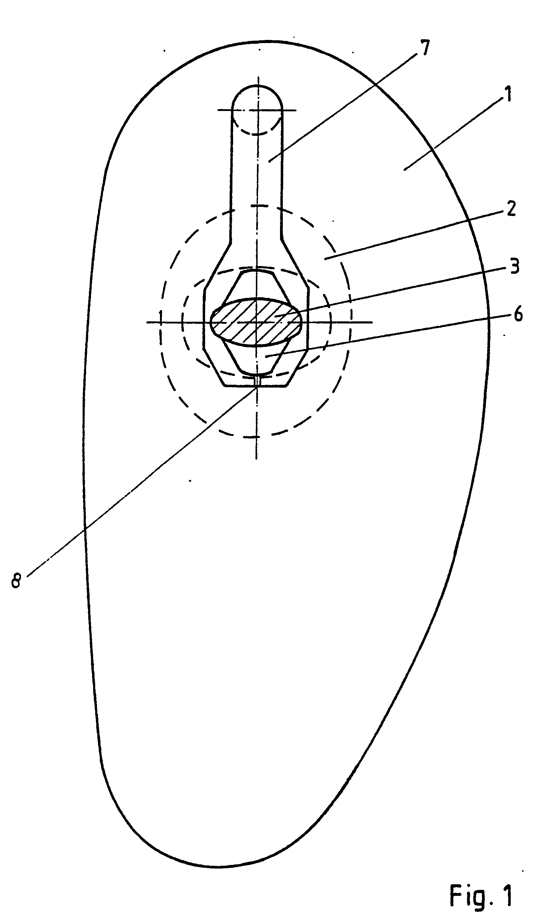

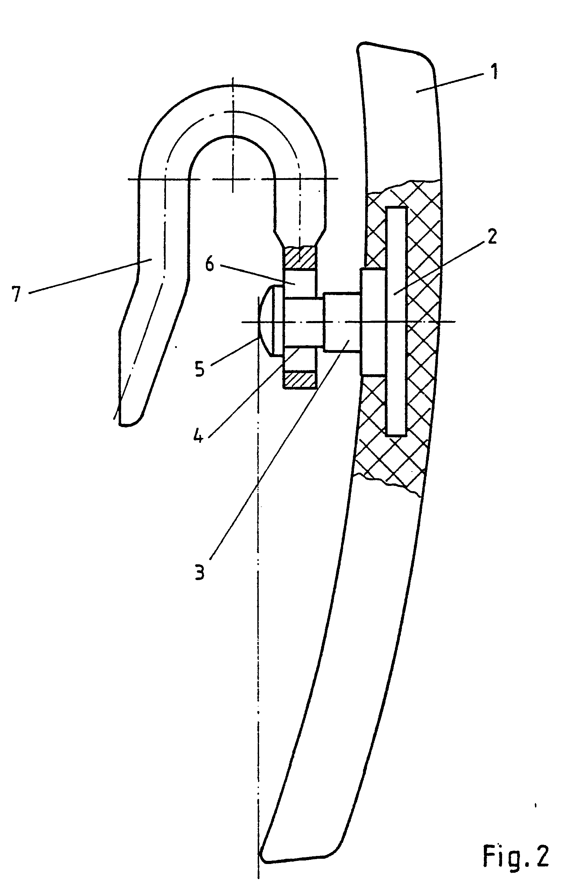

Die Figuren 1 und 2 zeigen schematisch eine beispielhafte ausführungsform der erfindungsgemäßen Padbefestigung im Längs- und Querschnitt.

In einem Pad (7) ist eine Padeinlage (2) eingebettet, deren zapfenförmiges Befestigungsteil (3) mit einer umlaufenden Nut (4) versehen ist. Im Nutbereich (4) und im außenbereich (5) besitzt das zapfenförmige Befestigungsteil (3) einen ellipsenförmigen Querschnitt. Die Nut (4) wird von einer Öse (6) umfasst, die mit der Stegstütze (7) eine Einheit bildet und einen Schlitz (8) aufweist. Dabei ist die Breite der Nut (4) etwa 0,1 bis 0,2 mm größer als die Dicke der Öse (6). Der Querschnitt der Öse (6) besteht aus zwei senkrecht aufeinanderstehenden Ellipsen, wobei die zum Schlitz (8) parallel liegende Ellipse in ihrer Längsund Querachse größer ist als die Ellipse des Zapfens (3), so daß der Zapfen (3) ohne Schwierigkeiten in diese Öse (6) eingeführt werden kann.

Die zum Schlitz (8) im rechten Winkel stehende Ellipse ist in ihrer Längsachse um ein geringes kleiner als die Ellipse des Zapfens (3) und in ihrer Querachse der Ellipse des Zapfens (3) angepasst. Durch ein Drehen um 90° sitzt daher der Zapfen (3) in der Öse (6) fest. Zur Befestigung wird der Pad (7) mit dem Zapfen (3) quer in die Öse (6) der Stegstützte (7) eingeführt. Wird der Pad (1) nun um 90° gedreht, so geht der Schlitz (8) auf, die Öse (6) weitet sich und der Zapfen (3) rastet ein und sitzt in der Öse (6) fest. Da die Nut (4) des Zapfens (3) in axialer Richtung breiter ist als die Öse (6), ist die Lage des Pads (1) in axialer Richtung variabel und kann sich dem Nasenrücken anpassen.

Die Lösung der Padbefestigung erfolgt in umgekehrter Reihenfolge auf die gleiche einfache Weise. Daher können die Pads ohne Werkzeuge ausgewechselt werden.

Die Stegstütze (7) ist vorteilhafterweise aus einem Stück gefertigt, ohne Lötstelle, und besteht aus einem aushärtbaren Federwerkstoff. Wegen der glatten Formen sind Stegstütze (7) und Padeinlage (2) rationell herstellbar.

## Patentansprüche

1. Padbefestigung für Brillenfassungen, bestehend aus einer Padeinlage mit einem zapfenförmigen, mit einer umlaufenden Nut und einem zum freien Ende hin anschließenden außenbereich versehenem Befestigungsteil und einer mit einer geschlitzten Öse versehenen Stegstütze,

**dadurch gekennzeichnet,**

daß das zapfenförmige Befestigungsteil (3) in seinem Nut- (4) und außenbereich (5) jeweils einen ellipsenförmigen Querschnitt besitzt und die Innenseite der Öse (6) der Stegstütze (7) im Querschnitt einer Kontur folgt, die aus zwei mit ihren Längsachsen senkrecht aufeinander stehenden Ellipsen zusammengesetzt ist, wobei die zum Schlitz (8) parallel liegende Ellipse in ihrer Längs- und Querachse größer als die Ellipse des außenbereichs des Zapfens (3) ist und die zum Schlitz (8) im rechten Winkel stehende Ellipse in ihrer Längsachse um ein geringes kleiner als die Längsachse der Ellipse des Zapfens (3) in dessen Nutbereich und in ihrer Querachse der Ellipse des Zapfens (3) angepaßt ist, so daß der Zapfen (3) bei der Montage durch Drehen um 90° gegenüber der Öse (6) in die im rechten Winkel zum Schlitz (8) stehende Ellipse einrastet.

2. Padbefestigung für Brillenfassungen,

**dadurch gekennzeichnet,**

daß die in Richtung der Zapfenachse definierte Breite der Nut (4) des Zapfens (3) größer ist als die Dicke der Öse (6) der Stegstütze (7).

## Claims

1. A pad fixing means for spectacle frames consisting of a pad insert with a peg-shaped fixing member which is provided with an encircliqg groove and an outer region whichis adjacent toward the free end, and a bridge support provided with a slotted eyelet, characterised in that the peg-shaped fixing member (3) has a respective ellipsoidal cross-section in its groove region (4) and outer region (5) and the interior of the eyelet (6) of the bridge support (7) follows a contour in cross-section which is composed of two ellipses which are perpendicular to one another with their longitudinal axes, wherein the ellipse lying parallel to the slot (8) is greater in its longitudinal and transverse axis than the ellipse of the outer region of the peg (3) and the ellipse which is at right angles to the slot (8) is adapted in its longitudinal axis so as to be slightly smaller than the longitudinal axis of the ellipse of the peg (3) in its groove region and in its transverse axis to the ellipse of the peg (3) so that the peg (3) catches into the ellipse which is at right angles to the slot (8) by being pivoted by 90° to the eyelet (6) during assembly.

2. A pad fixing for spectacle frames, characterised in that the width of the groove (4) of the peg (3) defined in the direction of the peg axis is greater than the thickness of the eyelet (6) of the bridge support (7).

## Revendications

1. Fixation d'une sellette de suspension pour montures de lunettes, constituée d'un accessoire de suspension constitué d'une pièce de fixation en forme de téton entourée d'une gorge et pourvue d'une zone extérieure se raccordant à l'extrémité libre et d'une tige pourvue d'un oeillet fendu, fixation caractérisée en ce que la pièce de fixation en forme de téton (3) posséde, dans la zone de sa gorge (4) et extérieure (5) chaque fois une section transversale ellipsoidale et qee la place intérieure de l'oeillet (6) de la tige d'appui (7) suit, en coupe transversale, un contour qui est composé de deux ellipses superposées, leurs axes longs étant perpendiculaires l'un à l'autre, pendant que l'ellipse placée parallélement à la fente (8) est, par ses axes longitudinal et transversal, plus grande que l'ellipse de la zone extérieure du téton (3) et l'ellipse qui est perpendiculaire à la fente (8) est, par son axe long, un peu plus petite que l'axe long de l'ellipse du téton (3) dans la zone de sa gorge et est adaptée par son axe transversal à l'ellipse du téton (3) de sorte que ce téton (3) s'engage, au cours du montage, si on le fait tourner de 90° par rapport à l'oeillet (6), dans l'ellipse qui est perpendiculaire à la fente (8).

2. Fixation de suspension de lunettes caractérisée en ce que la largeur, définie dans le

5        0 115 831        6

sens de l'axe du téton, de la gorge (4) de ce téton (3) est plus grande que l'épaisseur de l'oeillet (6) de la tige d'appui (7).

Fig. 1

Fig. 2